(19) Europäisches Patentamt
European Patent Office
Office européen des brevets

(11) Publication number: **0 103 799**
**A1**

(12) # EUROPEAN PATENT APPLICATION

(21) Application number: 83108722.6

(22) Date of filing: 05.09.83

(51) Int. Cl.³: C 01 B 33/28

(30) Priority: 10.09.82 IT 2320682

(43) Date of publication of application:
28.03.84 Bulletin 84/13

(84) Designated Contracting States:
AT BE CH DE FR GB LI LU NL SE

(71) Applicant: ENTE MINERARIO SICILIANO
Viale Regione Siciliana, 7723
I-90146 Palermo(IT)

(72) Inventor: Giordano, Nicola
Via Libertà 19
Messina(IT)

(72) Inventor: Burriesci, Nicola
Via Capitano Massimo Scala 19
Milazzo Messina(IT)

(72) Inventor: Ottana, Rosaria
Via Colapesce 9
Isolato 479 Messina(IT)

(72) Inventor: Cavallaro, Stefano
Villa Faro Superiore
Sperone Messina(IT)

(72) Inventor: Zipelli, Cesare
Via Pola, 17
Messina(IT)

(74) Representative: Modiano, Guido et al,
MODIANO, JOSIF, PISANTY & STAUB Modiano & Associati Via Meravigli, 16
I-20123 Milan(IT)

(54) **Method and plant for synthetizing iron-free zeolites.**

(57) Method of preparing iron-free zeolites from naturally-occurring materials which contain silicon, aluminium, and iron oxides to be found in nature in kaolin, clay, pumice and like forms by hydrothermally attacking the natural base materials, filtering the solid residue from the resulting solution, which contains all of the iron or compounds thereof; said solution, which constitutes the iron-free master liquor, is then subjected to a hydrothermal treatment at constant temperature for a determined time period, thereby iron-free zeolite is obtained which is filtered out.

Also disclosed is a plant for implementing the method.

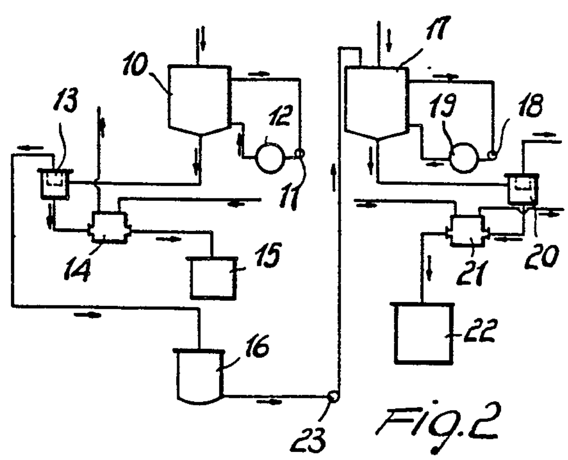


Fig.2

EP 0 103 799 A1

METHOD AND PLANT FOR SYNTHETIZING IRON-FREE ZEOLITES

This invention relates to a method and a plant for synthetizing iron-free zeolites.

As is known, zeolites are employed in a variety of fields, e.g. as selective adsorbents in the industry, as additives in the preparation of animal feed, in catalysis, and clot-preventing agents for fertilizers.

It has also been found that zeolites may be useful in the production of detergents. However, in the latter instance, it is essential that the zeolites being used be free of iron, which would otherwise jeopardize the final product characteristics. The zeolites utilized in the formation of detergents allow a partial substitution of sodium tripolyphosphate (STP), so that the detergent quality remains unaffected. The partial substitution of STP and of other similar materials by zeolites is closely related to the ecological issue, in that it can control and minimize the problems from eutrophization. Consequently, it becomes increasingly more important to develop processes which enable iron-free zeolites to be obtained from low cost, readily available materials occurring in nature.

Known heretofore have been several methods of producing zeolites from natural materials, namely, for example:

1. Hydrothermal synthesis of zeolites from rheolitic glass, kaolins, clays, etc., in the presence of sodium or potassium bases, or both.

2. Hydrothermal synthesis from leucite as the base product in the production of "semisynthetic" glass suitable for the preparation of Faujasite.

Such prior methods result in the formation of zeolites which contain iron, because iron is a natural component of the starting prime materials. It is apparent how, when iron-free zeolites are the objective, it becomes necessary to use some materials for starting materials which are free of iron. However, even in such a case, it is not possible to achieve a condition of total absence of iron, because commercially available starting materials (such as sodium silicate, aluminate, and carbonate) also contain trace iron. Irrespective of the nature of such starting materials, as is well known to the skilled ones, the hydrothermal synthesis of zeolites may be carried out in accordance with either of the following methods:

1. Acidification of a solution of sodium silicates, preferably with mineral acids, to produce a silicon gel which is in turn treated with a soda containing solution of sodium aluminate.

2. Addition of a solution of sodium aluminate and hydroxide to an aqueous solution of sodium silicate, which upon boiling, yield standard condition zeolites.

As specified at the outset, such methods suffer from some limitations. In particular, in the instance of a natural material such as pumice, kaolin, clay, etc., it is impossible to obtain zeolites which are entirely free of trace iron, because that element always remains on the solids obtained by hydrothermal synthesis (zeolite) as a result of the hydrothermal conditions to which the synthesis must be subjected. In the case of the synthesis from solutions it is necessary to have available starting materials containing silicium

and alluminum oxides completely free of iron.

Another disadvantage of such prior methods is that they require long contact times, or involve the use of highly expensive starting materials, particularly where the objective is iron-free zeolites since the starting materials must then be subjected to some special prior treatments to purify them.

In view of the above-outlined situation, it is a primary object of this invention to provide a method and a plant for synthetizing iron-free zeolites from natural materials containing silicon, aluminium, and iron oxides, and other materials selected from the broad class of such natural products as kaolin, clay, pumice, etc.; the method being required to utilize readily available natural materials and to involve low contact times for synthetizing the zeolites. Further, the inventive method is to be specially flexible and enable the obtainment on one and the same plant a broad range of solutions characterized by different $SiO_2/Al_2O_3$ and $SiO_2/Na_2O$ ratii, simply by changing the alkaline attack conditions during the initial processing stage. Finally, said method is to enable correlation of the synthesis conditions and type of synthesis product, and concurrent full use also of the solid residue from the initial processing stage.

The invention is further directed to providing a very simple plant for implementing the inventive method reaction.

These objects are achieved by a method for synthetizing zeolites, according to the invention,

characterized in that it comprises the steps of hydrothermally attacking natural products such as kaolins, clays, pumice, and the like or natural products containing oxides such as $SiO_2$ and $Al_2O_3$, and filtering the resulting solution to separate the solid residue containing iron or compounds thereof from a solution constituting the iron-free master liquor; hydrothermally treating the master liquor at a constant temperature and for a preset time period, and finally filtering the same to obtain iron-free zeolites.

Further features and advantages of the invention will be apparent from the following description of the method according to the invention and of a preferred, though not exclusive, embodiment of the plant, as illustrated by way of example and not of limitation in the accompanying drawings, where:

Figure 1 is a block diagram illustrating the principles underlying the method according to the invention;

Figure 2 shows schematically a plant implementing the inventive method; and

Figure 3 is a detail view of the plant shown in Figure 2.

The method, as illustrated by the block diagram of Figure 1, comprises essentially two steps. The first step is represented by the hydrothermal attack, wherein the starting material is subjected to a hydrothermal treatment in a soda alkaline medium, thus forming a solid zeolitic residue containing all of the iron

initially present on the solids. In this condition, the starting solids undergoes an irreversible change from amorphous into iron-rich zeolite, since as is known, iron, in strongly alkaline conditions, precipitates or is fixed as $Fe(OH)_3$. At the same time, a part of the starting material rich in $SiO_2$ and $Al_2O_3$ and iron-free goes into the solution and forms what will be called hereinafter the master liquor. This first step of the method is summarized in Figure 1 by the blocks 1 of hydrothermal attack proper, 2 of filtering, 3 of drying the solid zeolite residue, and 4 of obtainment of the master liquor.

Thus, the master liquor is free of iron because the pH of the hydrothermal attack step, having been kept within the range of from 10 to 12 and above, prevents the iron from going into the solution, since in such conditions it precipitates on the zeolite as iron hydroxide or is incorporated into the zeolite by ionic exchange or into the zeolitic structure.

The second step of the method will be called hereinafter the zeolitization process, and comprises treating the master liquor until iron-free zeolites are released. This second step is exemplified by the blocks 5 of hydrothermal attack of the master liquor, 6 of filtration of the resulting zeolites, and 7 of final drying. The block 8 denotes the step of recycle of the residues from the second filtration, which are reused for the hydrothermal attack of the block 1.

Shown schematically in Figure 2 is a plant implementing the inventive method. Particularly at 10,

there is indicated the reactor or mixer of the first stage, which is connected, by means of a circulation pump 11, to a boiler 12. Downstream of the mixer 10, there is provided a trap or filter 13, whereat the solid residue is separated from the master liquor. More specifically, the solid residue is passed to a drier 14 and then stored in a storing tank 15. The master liquor leaving the trap 13 is sent to a re-concentrator 16 and whence, through an additional pump 23, into the mixer 17 of the second stage. If desired, other starting materials, such as sodium hydroxide, aluminum oxide, and water, are added into said mixer. The mixer 17 of the second stage is also connected, through a pump 18, to a boiler 19, to keep constant the temperature within the mixer or reactor 17. Upon completion of this zeolitization step, the resulting product is passed to a trap or separator 20 which is operative to separate the residue from the zeolites. Said zeolites are then transported to a drier 21, and then stored in a storing tank 22.

Figure 3 shows in detail either one of the mixers 10 and 17 of Figure 2. More specifically, said mixers comprise two parts, a cylindrical body and the driving, speed-reducing part. The mixer has a heating jacket for diathermic oil heating, the inlet whereof is designated with the reference numeral 30. Indicated at 31 are seats for the thermocouples. Provided at the bottom end of the cylinder is a valve 32 for exhausting the final product, and arranged in the box-like structure of the cover are seats for the seals of the impeller shaft,

the pressure gauge, and safety valve. Also provided are an inlet for connection to a vapor cooling system and for a liquid charging pipe, and a charging section including a door 33. The impeller, which is connected to a gear motor through a reduction gear 34, has shaped blades. The mixer has control and safety systems.

Some factual examples will be next described of application of the inventive method in connection with Lipari pumice.

However, the method may be used also with such other natural materials as kaolin, clay, etc. Within the above criteria, the method according to this invention may be explained through the reactions listed hereinafter limited to optimum conditions.

1. (Lipari) pumice + NaOH $\xrightarrow[t]{T}$ zeolites containing Fe + Master liquor, where T = 85°C $<$ T $<$ 102+105°C - solids/liquid ratio 1/2.5+1/50
t = 1 to 7 h - NaOH concentration = 9 to 20%

2. Master liquor $\xrightarrow[t]{T}$ zeolite free of Fe + scrubbing $H_2O$ where T = 95° to 105°C - t = 1 to 10 h

In particular, the process 1 which allows master liquid to be obtained is indicated as hydrothermal attack while the process described by the reaction 2 which leads to obtaining iron-free zeolites is called zeolitization process. More precisely, the reactors, thermostatically maintained at the reaction temperature are filled with a starting solution comprising sodium hydroxide in concentration ranging from 9 to 20%. Then, the pumice as weighed in variable quantities according to the solids-liquid ratio is slowly poured and, after

suitably stirring , the reaction is initiated for a number of hours which is occasionally specified. After the treatment the fine reaction pulp is filtered under a vacuum and the filtrate is removed. This, as placed in a suitable vessel, is kept for two hours at 110°C in a stove to remove any adsorbed liquid. Depending on the conditions of hydrothermal conversionof pumice into zeolite hundreds of liquors have been obtained which when analyzed by Atomic Absorption issued $SiO_2$/ $Al_2O_3$ ratii varying in the range of from 15 to 1560. Such liquors rich in $SiO_2$, $Al_2O_3$ and NaOH have been subjected to a zeolitization process at a temperature ranging from 95° to 105°C and reaction times from 1 to 7 hours following correction, if necessary, of the concentration of said compounds to the required stoichiometric ratii to obtain A or X zeolites or any other zeolite.

EXAMPLE 1 - Introduced into a stainless steel reactor (reactor 10 in Figure 2), the temperature of which is controlled by a thermostat and provided with a reflux condenser of a mechanical homogenizer are:

a) 2000 ml of an aqueous NaOH solution containing 11% by weight of NaOH
b) 400 g pumice.

Temperature is maintained at 95°C for 5 hours. Upon completion of the reaction the solid residue is separated from the master liquid by means of a filter (trap 13), whence it is sent to a drier 14 and then stored in a storing tank 15. Said iron impure zeolite shows on X-ray analysis a high degree of crystallinity

as confirmed by a good capability of adsorbing $H_2O$. The latter parameter, evaluated by means of a dynamic apparatus, amounts for said sample to about 15% by weight. The master liquid leaving the trap 13 is sent, through an additional pump 23, into the mixer 17 of the second stage.

That liquor has the following composition:

$1.27\ SiO_2 .\ 0.072\ Al_2O_3 .\ 1.17\ Na_2O . 5.6\ H_2O$

By suitably correcting the critical ratii ($SiO_2/Al_2O_3$; $Na_2O/SiO_2$ $H_2O/Na_2O$) of the solutions obtained as above, one realizes, in solution, the following composition compatible with the stoichiometric ratii of zeolite A:

$SiO_2/Al_2O_3 = 1.3$ $Na_2O/SiO_2 = 3$ $H_2O/Na_2O = 70$

Then one proceeds to the crystallization of the sodic amorphous aluminium-silicate maintaining said reaction mixture at the temperature of 105°C for a time period ranging from 5 hours to 7 hours. Then, one proceeds with separating the master liquor by the trap (20) and with scrubbing with deionized water.

The filtrate, placed in a capsule, is held for 2 hours at 110°C in a drier (21) for the purpose of removing any adsorbed liquid. The resulting solid product, appears to be, by X-ray analysis, of the type A, with a high degree of crystallinity. Also determined has been the ionic exchange power of anhydrous zeolite. That determination provides for an intense agitation of a zeolite suspension in a solution of $CaCl_2$ and $MgCl_2$ for a time period ranging from 1 to 20 minutes and at an ambient temperature of 22$\pm$ 2°C; the results

obtained are listed here below:

| | Capacity for exchange (mg CaO/g) | |
|---|---|---|
| | 5 min | 20 min |
| Calcareous solutions | 110 | 150 |
| Magnesium solutions | 12 | 36 |

EXAMPLE 2 - The reactor of Example 1 is loaded with: a) 200 ml of an aqueous solution of 12% by weight NaOH; b) 400 g pumice; the reaction temperature is maintained at 95°C for 5 hours. Separation of the reaction products has been effected in accordance with the same procedure followed in Example 1. The resulting solid residue shows when X-ray analysed a high crystallinity, the zeolite obtained in this case is Faujasite. The master liquor obtained in this case has the following composition:

$$1.41\ SiO_2 - 0.06\ Al_2O_3 - 1.35\ Na_2O - 55.6\ H_2O$$

That liquor is delivered into the mixer 17 of the second stage, wherein the molar ratii are corrected between the components of the reaction mixture in order to establish an equivalent composition to the stoichiometric ratii of zeolite A; in these cases such ratii are the following:

$$SiO_2/Al_2O_3 = 2.0 \qquad Na_2O/SiO_2 = 1.6 \qquad H_2O/Na_2O = 20$$

Then, one proceeds with the crystallization of the sodium aluminium-silicate, maintaining the reaction mixture at the temperature of 95-100°C for 1 to 5 hours, again under powerful stirring.

Then, one proceeds with the separation of the solid product from the master liquor and later with the drying thereof as per Example 1.

The resulting solid product is of Type A with a high degree of crystallinity. The exchange capacity of the resulting zeolite has been determined as explained in Example 1,and is of 150 mgr CaO/g zeolite in the instance of calcareous water.

EXAMPLE 3 - From a treatment as in Example 1, a solution (master liquor) has been obtained which contains:

93.71 g/l $SiO_2$ 3.84 g/l $Al_2O_3$ 97.37 g/l $Na_2O$

The composition of the liquor thus obtained has been suitably changed by the addition of $NaAlO_2$, $Na_2O$, $H_2O$, thereby the critical ratii of the solution are the following:

$SiO_2/Al_2O_3 = 2.5$ $Na_2O/SiO_2 = 1.6$ $H_2O/Na_2O = 20$

The solid product obtained following crystallization as per Example 1 in suitable time and temperature conditions shows to be upon X-ray analysis zeolite A.

Tests of ionic exchange in calcareous and magnesium solutions yield the following values:

| | Capacity for ionic exchange (mg CaO/g) | |
| --- | --- | --- |
| | 5 min. | 10 min. |
| Calcareous solutions | 120 | 155 |
| Magnesium solutions | 30 | 45 |

EXAMPLE 4 - In conformity with a treatment as above, a master liquid has been obtained which has a composition in terms of oxides, as follows:

$1.41\ SiO_2 - 0.06\ Al_2O_3 - 1.35\ Na_2O - 45.8\ H_2O$

Based upon known methodologies to the skilled one, suitably correcting the final composition fed to synthesis into:

$SiO_2/Al_2O_3 = 1.5$ $Na_2O/SiO_2 = 2$ $H_2O/Na_2O = 65$

after a time period ranging from 1 to 5 hours and at a temperature of 100°C a prevalence of zeolite A has been obtained.

EXAMPLE 5 - By operating in accordance with the methodology, set forth above, there has been obtained during the first step of the process, in appropriate conditions, an Fe impure solid product which, upon X-raying, shows to be of the Faujasitic type. The corresponding master liquid had such a composition in terms of $SiO_2$, $Al_2O_3$ and $Na_2O$ as to satisfy the following molar ratii:

$SiO_2/Al_2O_3 = 20$   $Na_2O/SiO_2 = 0.014$   $H_2O/Na_2O = 23,35$

By suitably correcting the composition of the above liquor so as to establish in the solution the following molar ratii

$SiO_2/Al_2O_3 = 2.5$   $Na_2O/SiO_2 = 1.6$   $H_2O/Na_2O = 25$

and operating in the conditions as set forth hereinbefore, one obtains after 3 hours at 100°C a product mainly made up of zeolite X.

EXAMPLE 6 - By operating with the same methodology as in Example 1 in appropriate conditions of time, temperature and NaOH concentration, a master liquor has been obtained whose composition (Table A) has been modified with the addition of $NaAlO_2$, $H_2O$ and $Na_2O$, such that the overall ratii, as expressed in moles, between the components of the reaction mixture are equivalent to the stoichiometric ratii of Zeolite A (Table A).

TABLE A

| | Composition | |
|---|---|---|
| | Master liquor | Reaction mixture |
| $SiO_2/Al_2O_3$ | 25.75 | 2.5 |
| $Na_2O/SiO_2$ | 2.03 | 2.4 |
| $H_2O/Na_2O$ | 21.37 | 25 |

Operating with methodologies as set forth hereinbefore, a mixture of zeolite A and X has been obtained by operating at 100°C for 1 to 7 hours.

EXAMPLE 7 - From a hydrothermal treatment as per Example 1, a solution has been obtained in suitable synthesis conditions which has the following composition:

$1.6\ SiO_2-0.04\ Al_2O_3-1.89\ Na_2O-43.46\ H_2O$

The composition of the resulting liquor has been suitably modified to obtain the following final ratii:

$SiO_2/Al_2O_3 = 2.5 \quad Na_2O/SiO_2 = 1.2 \quad H_2O/Na_2O = 30$

The reaction time required for crystallization has been 3 hours at a temperature of 95°C.

The zeolitic product obtained in such synthesis conditions is a mixture of zeolite A and X having a high degree of crystallinity.

EXAMPLE 8 - A zeolitization process has been carried out on the same liquor as in Example 7 which envisaged different concentrations of the solution components, in particular a different $SiO_2/Al_2O_3$ ratio and different synthesis conditions.

In the final conditions of

$SiO_2/Al_2O_3 = 3.3 \quad Na_2O/SiO_2 = 1.2 \quad H_2O/Na_2O = 30$

after a reaction time of 6 hours at a temperature of 95°C a single zeolitic X species has been obtained having a high degree of crystallinity.

EXAMPLE 9 - Example 1 has been repeated leaving the reaction conditions unchanged but altering the solution composition in terms of the $SiO_2/Al_2O_3$ ratio. From the solution whose final composition was

$SiO_2/Al_2O_3 = 5.3$ $Na_2O/SiO_2 = 1.2$ $H_2O/Na_2O = 30$

zeolite X has been obtained. The resulting zeolitic product shows on X-raying a high crystallinity.

To gather further confirmation that the liquors, and hence the zeolitic products obtained therefrom with the methodology described hereinabove, are free of Fe, perborate decomposition tests have been carried out. That determination consists of evaluating the perborate residue percentage as it is mixed with an amount of zeolite at a temperature of 60°C for 20 minutes.

As may be seen from the results brought forth in Table 1, our zeolites have a very low perborate decomposition power, thus showing the mere presence of trace Fe.

TABLE 1

| Composition | Decomposed perborate (%) |
|---|---|
| Example 1 | 28 |
| Example 2 | 27 |
| Example 3 | 30 |
| Example 4 | 25 |
| Example 5 | 19 |
| Example 6 | 20 |

TABLE 1 (continued)

| Composition | Decomposed perborate (%) |
| --- | --- |
| Example 7 | 20 |
| Example 8 | 22 |
| Example 9 | 25 |
| Commercial Control Type 4A | 45 |

As may be noted from the foregoing description, the method of this invention achieves its objects.

In particular, the method described allows both iron-free and iron-containing zeolites to be obtained simultaneously, not only from a natural material but also from any material rich in silicon and aluminium oxide. This is specially advantageous, in that it enables the use of starting materials which are available in large quantities to an almost unlimited extent and readily available. The process is the more convenient in that the water glass (molar $SiO_2$:$Na_2O$ = 3.46), a product which is generally used by the other methods of synthetizing zeolites, is ordinarily prepared by heating in a kiln a mixture of siliceous sand and sodium carbonate, with a considerable expenditure of energy, whereas the silicate and/or silicates present in the master liquor according to the invention may be obtained with considerable energy savings, directly in solution, by hot digesting (hydrothermal treatment) pumice in a caustic soda solution.

Further, the inventive method affords the advantageous characteristic that the synthesis process described involves relatively short contact times,

low synthesis temperatures, and considerable flexibility of the system. In fact, the temperature range may extend from 85°C to boiling (102°-105°C), and possibly even above that; the sodium hydroxide concentration may vary within the 9-20% range and above, the contact time in the range from 1 to 10 hours, thus enabling an improved control on the quality of the synthesis product depending on the initial reaction conditions. That feature reflects in quite high energy savings and important economical advantages as well as in purity characteristics. In fact, as is apparent from the foregoing examples, the amount of iron present in the zeolites obtained by synthesis from the master liquor (steps 5-6-7 of the diagram of Figure 1) never exceeds 10 ppm, that positive feature being also confirmed by the slower rate of decomposition of the perborate in the zeolites obtained in accordance with the method according to this invention than those commercially available. That feature makes the product obtained from the master liquor in the manner illustrated hereinabove particularly suitable for use in detergents. In fact, as is known to the skilled one, a basic property of zeolites for detergent applications must be that of not decomposing the perborate significantly, which perborate is a component of commercial detergent formulations added thereto on account of its bleaching properties. Since even trace iron is known to decompose the perborate, the importance of this invention as relates to the use of such zeolites in the detergent industry becomes

quite apparent. The fact is to be added to said positive features that the zeolites obtained in accordance with this invention show a high degree of exchange toward calcium and magnesium comparable with commercial zeolites as well as a grain size within the limits required for effective washing.

From a more general standpoint, particularly advantageous is the fact that the master liquid, as obtained as the product of the initial processing stage, being rich in sodium hydroxide, is more stable than similar solutions of aluminates having a low alkaline content, in fact, contrary to what occurs in such cases, there occurs no aluminium hydroxide precipitation.

Of not negligible import is also the low cost of the prime material, the possibility of enhancing the value of prime materials available in the territory, the possibility of expansion to include other low-value materials containing $SiO_2$, $Al_2O_3$ and Fe oxides, and the absolute conversion flexibility and reaction selectivity. Moreover, the system required to implement the inventive method is extremely simple.

CLAIMS

1. A method for synthetizing zeolites, characterized in that it comprises the steps of hydrothermally attacking natural products such as kaolin, clay, pumice, and the like or natural products containing oxides such as $SiO_2$ and $Al_2O_3$, filtering the resulting solution and separating the solid zeolitic residue containing all the iron or compounds thereof present in the starting prime materials.

2. A method according to Claim 1, characterized in that said hydrothermal attack step is carried out in a soda alkaline medium.

3. A method according to Claim 1, characterized in that said hydrothermal attack step is carried out at temperatures in the 85 to 105°C range.

4. A method according to Claim 1, characterized in that said hydrothermal attack step is carried out in time intervals ranging from one to ten hours.

5. A method for synthetizing iron-free zeolites from a "master liquor" resulting from the treatment according to Claim 1, said master liquor being rich in $SiO_2$ and $Na_2O$ as well as in $Al_2O_3$, free of Fe, which comprises subjecting said master liquor to a subsequent hydrothermal treatment in an alkaline medium.

6. A method according to Claim 5, characterized in that said step of hydrothermally treating said master liquor is carried out in time intervals ranging from one to ten hours.

7. A method according to Claim 5, characterized in that said step of hydrothermally treating said master liquor is carried out at temperatures in the

95 to 105°C range.

8. A plant for synthetizing iron-free zeolites, characterized in that it comprises a first reactor (10) connected through a circulating pump (11) to a boiler (12), a first trap or filter (13) arranged serially to said reactor (10), a first drier (14) and a second reactor (17) located downstream of said first trap (13) and in parallel to each other, a second trap (20) located downstream of said second reactor (17), and a final drier (21) for the finished product, said second reactor (17) being connected through a second circulating pump (18) to a boiler (19).

9. A plant according to Claim 8, characterized in that said first and second reactors (10,17) include a heating jacket mixer adapted for connection to a cooling section and to a shaped blade impeller mechanical agitator.

10. A plant according to the preceding claims, characterized in that it comprises between said first trap (13) and said second reactor (17) a re-concentrating unit (16).

0103799

1/1

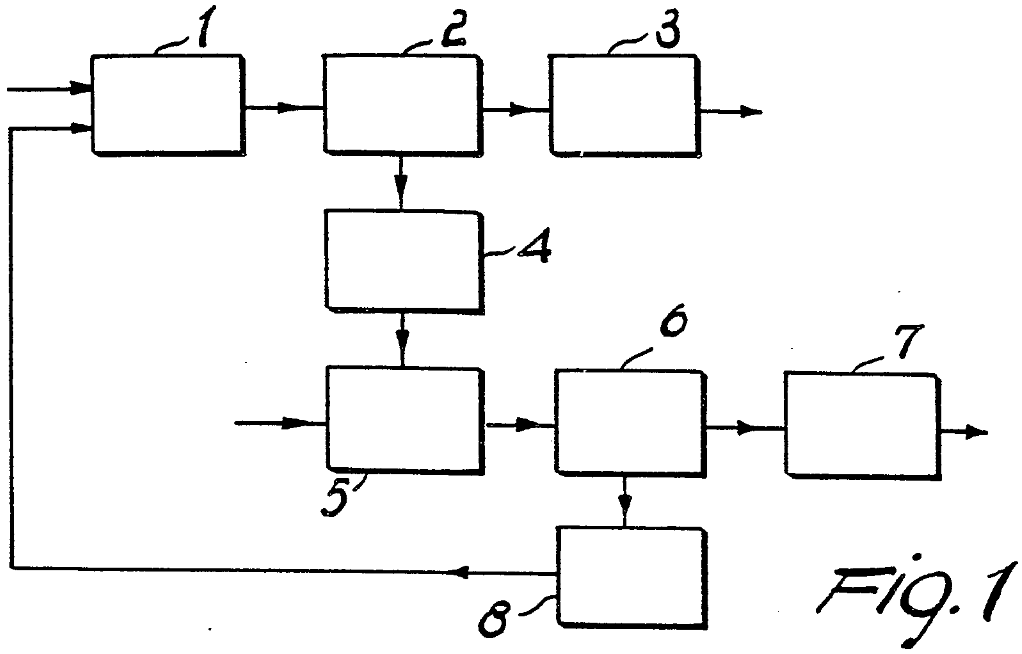


Fig. 1

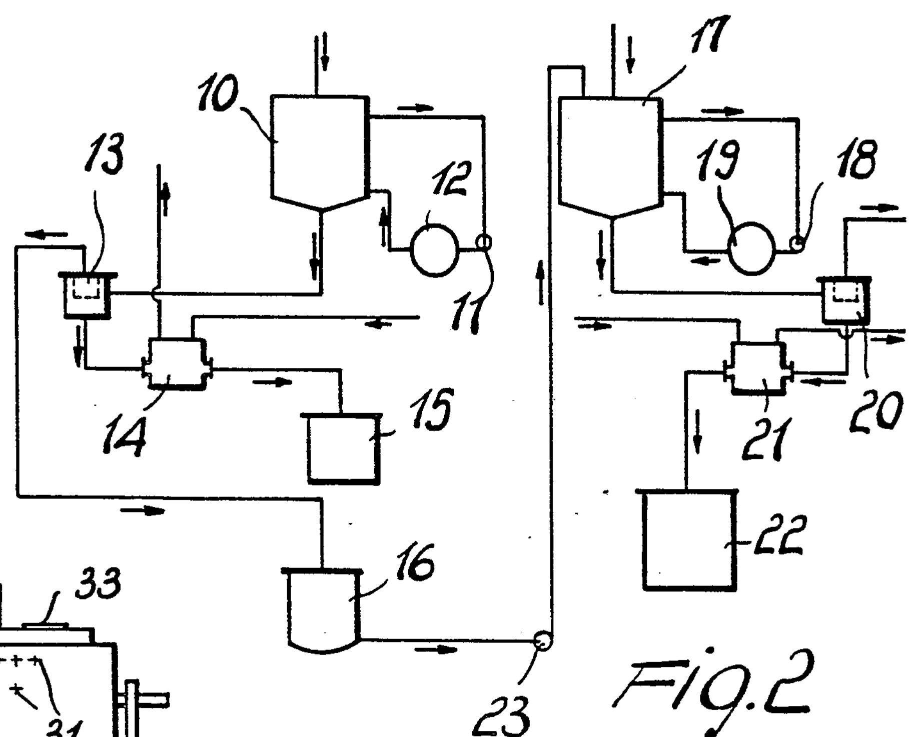


Fig. 2

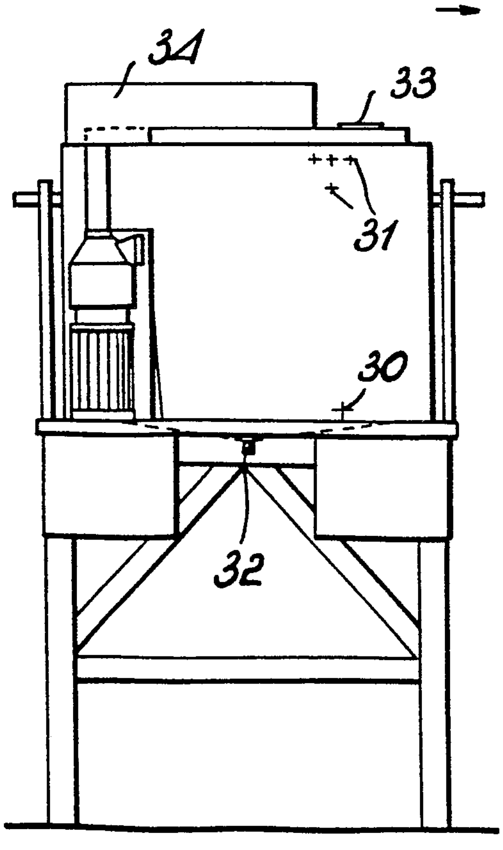


Fig. 3

0103799

European Patent Office

# EUROPEAN SEARCH REPORT

Application number

EP 83 10 8722

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 408 989 (KYORITSU CERAMIC MATERIALS) * Page 10, last paragraph - page 11, paragraph 3 * | 1 | C 01 B 33/28 |
| | --- | | |
| A | DE-A-2 635 357 (DEGUSSA) * Example 8 * | | |
| | ----- | | |
| | | | **TECHNICAL FIELDS SEARCHED (Int. Cl. 3)** |
| | | | C 01 B 33/00 |

The present search report has been drawn up for all claims

| Place of search | Date of completion of the search | Examiner |
|---|---|---|
| BERLIN | 13-12-1983 | KESTEN W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document